# EUROPEAN PATENT SPECIFICATION

(11) **EP 2 798 566 B1**
(45) Date of publication and mention of the grant of the patent: **09.10.2019**
(21) Application number: 11878332.3
(22) Date of filing: 31.12.2011
(51) Int. Cl.: G06F 21/57

(54) **SECURING DEVICE ENVIRONMENT FOR TRUST PROVISIONING**
SICHERUNG EINER VORRICHTUNGSUMGEBUNG FÜR VERTRAUENSWÜRDIGKEIT
SÉCURISATION D'UN ENVIRONNEMENT DE DISPOSITIF POUR APPORTER LA CONFIANCE

(43) Date of publication of application: 05.11.2014
(73) Proprietor: Intel Corporation, Santa Clara, CA 95054 (US)
(72) Inventor: DODEJA, Rakesh, Portland Oregon 97229 (US); DEVRIES, Alex, Ottawa Ontario K1S 4A5 (CA); RAJAN, Ashok Sunder, Burnaby British Columbia V5A 3V7 (CA); JAYANNA, Hemaprabhu, Folsom California 95630 (US); TISO, William J., Hilton Head Island South Carolina 29928 (US); BROSS, Kevin W., Tigard Oregon 97224 (US); HUNTER, Robert, Hillsboro Oregon 97123 (US)
(74) Representative: Rummler, Felix
(86) International application number: PCT/US2011/068266
(87) International publication number: WO 2013/101236

(56) References cited:
- EP-A1- 2 282 474
- US-A1- 2002 040 436
- US-A1- 2005 262 086
- US-A1- 2007 143 629
- US-A1- 2008 045 342
- US-A1- 2009 049 510
- US-A1- 2009 271 637

## Description

### FIELD

Embodiments of the invention are generally related to computing device security, and more particularly to integrity checking for trust provisioning.

### BACKGROUND

Many computing devices are deployed for delivering services, such as digital media players, smart meters, point of sale (PoS) terminals, certain vending machines, ATMs (automated teller machines), factory equipment, or other devices. The devices are pre-provisioned by one or more stakeholders of a service delivery channel. Digital media players can provide on-demand media services, but will need to be provisioned with a service provider client package that can bootstrap the service to the place of deployment of the device. Similarly, the smart meters and PoS terminals are also provisioned.

Deployment of such devices is typically accompanied by security solutions to reduce the exposure to compromise of the devices. The client package that is provisioned on the device should not be cloned or otherwise made available for service delivery that is not authorized by the service provider. Currently, the service provider needs to ensure that operations and processes are implemented where the client package gets injected into the device, which creates overhead for the service provider. The extent of the service deployment overhead varies with services and devices.

PoS terminals typically present the maximum overhead given their direct engagement in financial transactions. Card networks and holders in the payment network go to great lengths to work with PoS terminal manufacturers to ensure security of the terminals before transactions can be authorized through them. These service providers are very deep and tightly engaged into their highly closed channels. On the other hand, business expansion of all these service providers is entirely dependent on the extent of proliferation of the devices on which their services are delivered. Ensuring the security of the devices comes with significant overhead that creates issues with scaling that are difficult for any business.

Currently, security is also enhanced by the use of single-purpose computing devices. The hardware is typically of a custom design, and is made specific to the purpose and the service or function intended to be provided by the target device. The custom nature of the devices prevents modification or expansion to the services provided by the devices. Thus, even as there is a focus on securing the devices, the security mechanisms prevent scaling, and the security mechanisms reduce the ability of the devices to have their services modified.

US 2009/271637 A1 describes an information processing terminal that provides a plurality of notified parties with notification of accumulation of entries indicating data that shows a status change, the information processing terminal comprising: a cumulative storage section that holds accumulation of entries used for detecting tampering of a log of an entry for each of the plurality of notified parties; a multi-log measurement section that commands to update, on the basis of one entry, a plurality of the accumulation of entries corresponding to the plurality of respective notified parties held in the cumulative storage section; and a verification request section that transmits to the notified party data containing data made by affixing a digital signature to the accumulation of entry held in the cumulative storage section corresponding to the notified party.

EP 2282474 A1 describes a method to provide secure mobile communications by authenticating a mobile device seeking communication with a secure server. The method prescribes steps for generating a code to indicate a plurality of portions of a digital fingerprint to request from the mobile device, each portion representing a different parameter of the mobile device, sending the code to the mobile device, receiving from the mobile device a response code representing the requested plurality of portions of the digital fingerprint, comparing each portion of the received plurality of portions with one or more predetermined codes, and granting the mobile device an access privilege when results of the comparison satisfy a predetermined minimum accuracy.

Document US2005262086 describes a method and a system for integrity certification and verification in a computer environment based on characteristics and behaviours of one or more applications, systems and system components as compared with a profile of characteristics and behaviours, including determining a behaviour integrity profile.

### BRIEF DESCRIPTION OF THE DRAWINGS

The following description includes discussion of figures having illustrations given by way of example of implementations of embodiments of the invention. The drawings should be understood by way of example, and not by way of limitation. As used herein, references to one or more "embodiments" are to be understood as describing a particular feature, structure, or characteristic included in at least one implementation of the invention. Thus, phrases such as "in one embodiment" or "in an alternate embodiment" appearing herein describe various embodiments and implementations of the invention, and do not necessarily all refer to the same embodiment. However, they are also not necessarily mutually exclusive.
Figure 1 is a block diagram of an embodiment of a security architecture.
Figure 2 is a block diagram of an embodiment of a system architecture having a trust provisioning security architecture.
Figure 3 is a flow diagram of an embodiment of a process for trust provisioning.
**Figure 4** is a block diagram of an embodiment of a computing system in which trust provisioning can be used.

Descriptions of certain details and implementations follow, including a description of the figures, which may depict some or all of the embodiments described below, as well as discussing other potential embodiments or implementations of the inventive concepts presented herein. An overview of embodiments of the invention is provided below, followed by a more detailed description with reference to the drawings.

### DETAILED DESCRIPTION

As described herein, trusted hash provisioning is used to ensure the integrity of a computing device. The trusted hash provisioning includes determining a hash mask, and computing a trusted hash based on signatures of components identified as included within the scope of the hash. The computed trusted hash computation is used to determine integrity of the computing device. The computing device that is the target of the integrity determination can be ensured to be secure prior to allowing it to provide its service. Thus, a multipurpose device can be as secure as a dedicated single-purpose device.

The trusted hash provisioning establishes a secure environment on devices allowing them to be trusted to provision a service. The service provider can verify if the device can be trusted for provisioning and bootstrapping the service. In contrast to current service provisioning, verification of device trust can happen at any point in the chain from the point where the device is manufactured to the point where the device is deployed and put to use. Thus, the engagement of the service provider with the channel can be lighter than currently possible. The secure environment and the mechanisms for verifying trust therefore allow for device manufacturing and distribution channels to open up, which in turn allow better scaling of services provider businesses.

As described herein, the security provisioning provides a secure environment that can cover BIOS (basic input/output system), OS (operating system) modules, kernel image, firmware elements, driver packages, filesystems, and/or application modules. As such, the security provisioning can provide a secure environment that spans the entire cross section of the target device (i.e., the device whose integrity is being verified), from the hardware to the application layers. In one embodiment, the security provisioning defines elements that tie in the different components of the target device into a comprehensive secure environment.

The security provisioning disclosed herein moves the point of provisioning device security from point of manufacture to the point of use. The securing of the device environment allows for the device to be secure as soon as it comes online. One or more roots of trust are provided in hardware, and the device starts up secure and begins enforcing security policies.

The security provisioning is particularly useful for end-to-end computing devices, which connect from one device to another, but do not typically have a user interface that allows access to the underlying system. Generally, only the client is available for interaction, and that only provides access to the single purpose of the device. Thus, there is no user to monitor the machine. If an error is detected, it must be detected and handled remotely, such as by an administrator. Such machine-to-machine devices need to be remotely provisioned, bootstrapped with one or more services and managed throughout their life cycle: from point of ,manufacture to point of use, and through end of life; end-to-end.

The creation of a secure environment as described herein provides mechanisms for making sure the target device is kept integral throughout the lifetime of the device. The integrity of the device is monitored and verified through any stage it goes through.

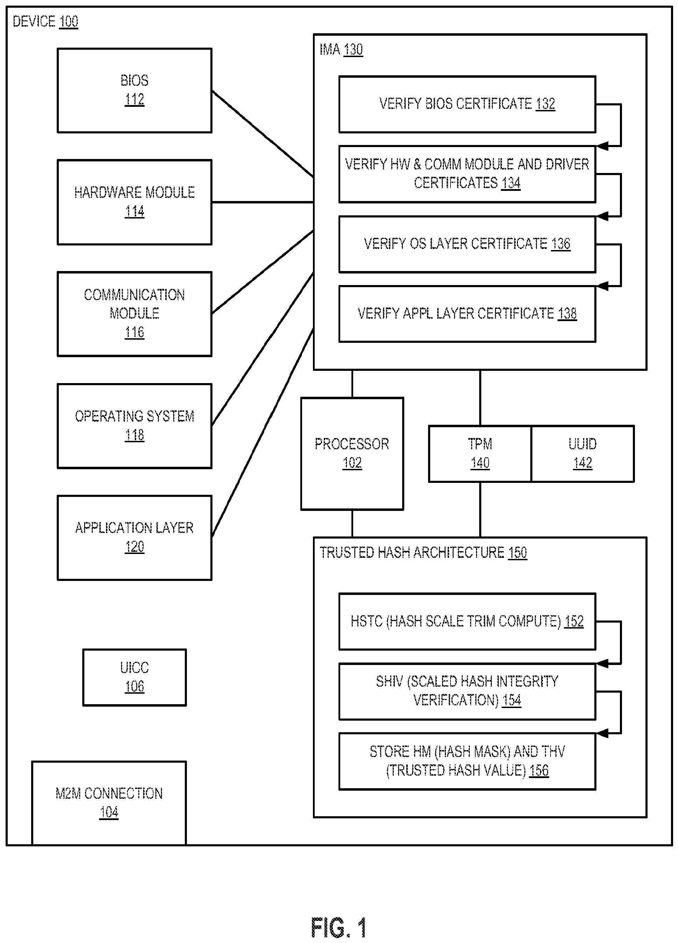

**Figure 1** is a block diagram of an embodiment of a security architecture. Device 100 is a computing device that is deployed for delivering services, and is accessible via a machine-to-machine connection. For example, device 100 can be computing system in a digital media player, a gaming console, a set top box, a DVR (digital video recorder), a smart meter, a point of sale (PoS), a vending machine, an ATM, a factory machine, or other device. In one embodiment, device 100 is a standalone computing device that does not have a user interface to interact with, except for to provide the service the device is deployed to provide. Thus, device 100 may not have a user interface for a user to locally interact with the device to perform operations related to device configuration or related to system operation. Instead, device 100 may be only accessible for its service client.

Device 100 is secured via trusted hash provisioning, in accordance with any embodiment disclosed herein. Trusted hash provisioning the first time the device is started up can guarantee that the device has an integral state prior to being used. Trusted hash can also be re-provisioned based on a last known integral state, which helps maintain integrity of the device throughout its life cycle. With the initial trust provisioning a device can go and seek what it should be, and if it cannot determine what it should be or if it does not test positive for integrity, the device can be blocked and prevented from turning on. With re-provisioning a device can be modified and have other service clients installed on top of it, while still locking itself down against any use outside its intended or defined purpose(s).

In one embodiment, device 100 includes each of the following components: BIOS 112, hardware module 114 (hardware platform, including drivers), communication module 116 (communication devices, including drivers), operating system (OS) 118, and application layer 120. Device 100 will typically include all of these components, but variations can exist without going outside the scope of trust provisioning described herein. One or more of the components is to be included in integrity verification. The highest security would include all components in the integrity verification. Each component included in the integrity verification provides a certificate for verification.

In one embodiment, the integrity verification is based on trusted environment verification in accordance with an implementation of an integrity management architecture (IMA). For example, the Linux IMA and TPM could be used. The IMA adopts the TCG (Trusted Computing Group) approach of sealing measured hashes of the filesystem into the TPM. The IMA performs computations to compare that a device hash matches a value expected by the service provider, which indicates the device can be trusted and provisioned for delivering services.

In one embodiment, IMA 130 is based on the IMA discussed above. TPM 140 is a trusted secure storage, and can store hash computations or other values for use in integrity verification. UUID 142 is an ID unique to device 100, and can also be stored in TPM 140. In one embodiment, device 100 includes two roots of trust, TPM 140 and UICC (universal integrated circuit card) 106. UICC can be, for example, a SIM (subscriber identity module) card or other circuit. When two roots of trust are used, it is not possible to spoof or clone the trusted device on other hardware, seeing that there will be mismatch. Thus, for example, swapping a SIM card into another device would not be effective at gaining access to the service. Additionally, with the use of UUID 142, each device is uniquely identified. With two roots of trust, different external entities can be associated with the different roots of trust, for example, such as an OEM (original equipment manufacturer) being associated TPM 140 and a service provider being associated with UICC 106.

Processor 102 executes the IMA and trusted hash architecture 150. Processor 102 can include one or more processing devices, and executes the functions necessary for trusted environment verification. In one embodiment, processor 102 is a host processor of device 102 (i.e., a processor that executes the OS). In one embodiment, an application processor or modem processor is used. In one embodiment, a dedicated trust processor performs the function calculations and signing. The functions can be executed from TPM 140 and/or UICC 106.

In one embodiment, IMA 130 is a standard IMA implementation, and can include the following. Function 132 enables IMA 130 to verify a BIOS certificate. Function 134 enables IMA 130 to verify hardware and communication module and driver certificates. Function 136 enables IMA 130 to verify an OS layer certificate. Function 138 enables IMA 130 to verify an application layer certificate. Each of these functions is deemed to be understood by those skilled in the art.

In one embodiment, trusted hash architecture 150 is an extension of IMA 130. Architecture 150 includes HSTC (hash scale trim compute) 152, SHIV (scaled hash integrity verification) 154, and storing or application of a hash mask and trusted hash value 156. HSTC 152 determines a hash mask that will be applied to the system, including identifying what components will be included in the scope of the hash computations and signing. In one embodiment, HSTC 152 includes making measurements of the components included in the scope. HSTC 152 allows an external entity (e.g., the service provider) to identify what components of device 100 make up the signature that will be provided to the external entity. The external entity can verify whether a system is restricted to its intended purpose because added components would change the signature.

SHIV 154 verifies the integrity of a hash across the entire platform as defined by the scope set by the hash mask. SHIV 154 compares a measured value to expected value to determine integrity. In one embodiment, SHIV is executed by a daemon running on an applications processor. SHIV 154 can execute at fixed or regular intervals, or can be driven by an interrupt or external trigger, or other trigger mechanism. In one embodiment, SHIV 154 can be executed in response to a request for a signature where the request identifies a scope of hash computation to be performed for the requested signature. Thus, the scope of verification of the integrity of the device can be identified in the request for verification of the device.

After computation of the trusted hash values, architecture 150 stores the values, including the hash mask and the THVs 156 in TPM 140. In one embodiment, the trust environment values are stored in TPM 140 and associated directly with UUID 142. Thus, the trust values can be tied to the UUID, ensuring that the trust environment is computed and verified for the correct hardware.

Device 100 includes M2M (machine-to-machine) connection 104, which allows the device to access the service provider for which it provides a service (e.g., streaming video provider, cable or dish provider, or other service provider). M2M connection 104 is also the access point for remote administration of device 100. In one embodiment, one or more services can be modified remotely on device 100, and new trusted environment parameters can be applied to the device to ensure trust.

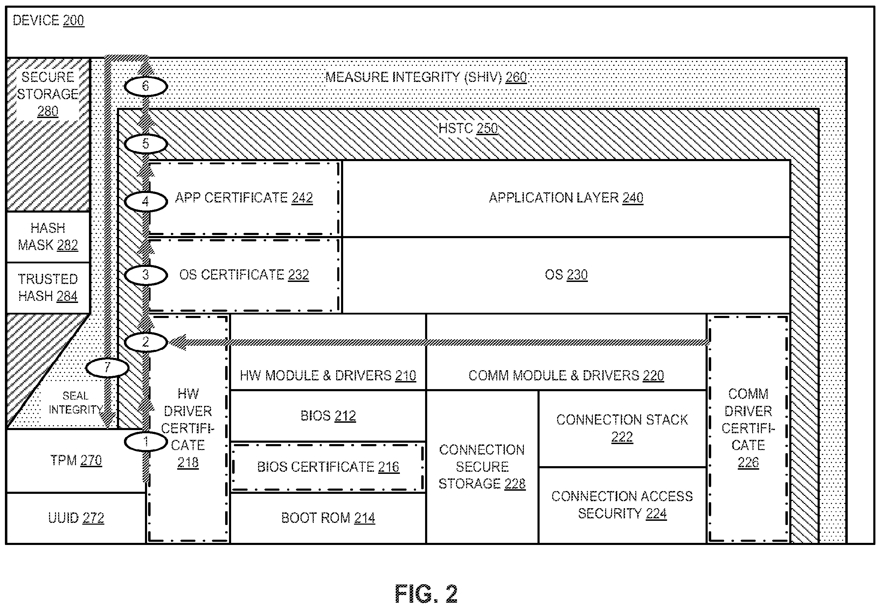

**Figure 2** is a block diagram of an embodiment of a system architecture having a trust provisioning security architecture. Device 200 can be an example of device 100 of Figure 1. Figure 2 visually depicts a representation of the scope of integrity verification operations. Thus, it is seen that HSTC 250 and SHIV 260 encompass up to all the components of device 200. In one embodiment, one or more components are not included in the trusted environment computations.

In one embodiment, the trusted environment verification proceeds in accordance with the number identified in the figure. For purposes of description, the numbers are followed in order below.

Device 200 includes hardware (HW) module(s) and associated drivers 210, which could also be referred to as hardware platform 210. Drivers include interface logic to manage hardware elements. Hardware platform 210 includes BIOS 212, which provides boot control and system initialization operations for device 200. Hardware platform 210 includes boot ROM (read only memory) 214, which stores the BIOS and is the initialization address of device 200 on power-up. BIOS certificate 216 represents a security certificate provided by BIOS 212. In one embodiment, BIOS certificate 216 is of a form: CBIOS{KU∥EKR_{CA1}[H[BIOS_{Val}]]}-HSTC 250 can include verification of BIOS certificate 216 at operation 1.

Device 200 includes communication module and drivers 220, which can also be referred to as communication platform 220. Communication platform 220 includes one or more connection stacks 222, and connection access security 224 associated with a connection. Communication platform 220 can also include connection secure storage 228 for purposes of security in a communication connection. This can be the UICC and the connection root of trust under control of the service provider. It can be provisioned by the service provider with the hash parameters across which HSTC 250 needs to compute hash mask 282. For example, an M2M connection can be a secured channel that uses keys or other authentication information during a session. Communication driver certificate 226 represents a security certificate provided by communication platform 220. In one embodiment, communication driver certificate 226 is of a form: CComm{KU∥EKR_{CA1}[H[Comm_{Val}]]}. HSTC 250 can include verification of communication driver certificate 226 at operation 2.

Operation 2 can also include verification of hardware driver certificate 218 of driver components of hardware platform 210. In one embodiment, hardware driver certificate 218 is of a form: CHW{KU∥EKR_{CA1}[H[HW_{Val}]]}. In one embodiment, verification of communication driver certificate 226 and hardware driver certificate 218 are performed in separate operations.

Device 200 includes OS 230, which is a software layer that executes on the hardware and communication platforms. OS 230 generally controls operation of device 200 from a user-interaction perspective. OS certificate 232 is a security certificate provided by OS 230. In one embodiment OS certificate 232 is of a form: COS{KU∥EKR_{CA2}[H[OS_{Val}]]}. HSTC 250 can include verification of OS certificate 232 at operation 3.

Device 200 includes application layer 240, which is a layer of applications that execute on a software platform provided by OS 230. OS 230 generally handles device hardware management, which is leveraged by applications that simply have to make calls to the operating system, rather than having to try to individually manage the entire hardware platform. Application layer 240 provides security certificate APP certificate 242. In one embodiment APP certificate 242 is of a form: CAPP{KU∥EKR_{CA2}[H[APP_{Val}]]}. HSTC 250 can include verification of APP certificate 242 at operation 4.

At operation 5, HSTC 250 applies hash mask 282 to the signatures of the different components that make up the integrity check hash. A hash mask defines the coverage breadth of the security hash, identifying one or more of BIOS 212, OS modules of OS 230, firmware elements and driver packages such as hardware platform 210 and communication platform 220, filesystems of OS 230, application modules of application layer 240, and/or other components, across which the hash is to be computed. Any updates to device 200 will cause an update to the expected hash values, which are typically computed by the service provider and sent to the device for storing in secure storage 280.

The standard application of IMA seals measured hashes of the filesystem into the TPM. Device 200 can be considered trusted if a hash matches an expected value. HSTC 250 is part of the secure environment provisioning that computes a hash value on the current system configuration for comparison with known good values. SHIV 260 can then make the comparison to determine the integrity of the hash computation(s).

The service provider defines the needs of the device that will offer its service. Thus, the service provider determines a device profile on which service will be delivered. Once the device profile is determined, the service provider or a device manufacturer can determine hash mask 282 and trusted hash values 284. Device manufacturers and distributors then ensure that devices in the channel (such as device 200) match these values for service delivery. In one embodiment, they provide UUID 272 to one or more service providers and obtain authorization for the hash mask and trusted hash value to be injected into the device. With authorization, hash mask 282 and trusted values 284 are injected into device 200, which includes UUID 272 that matches the UUID authorized by the service providers. After SHIV 260, the integrity can be sealed into TPM 270 at operation 7, storing the computed, verified values.

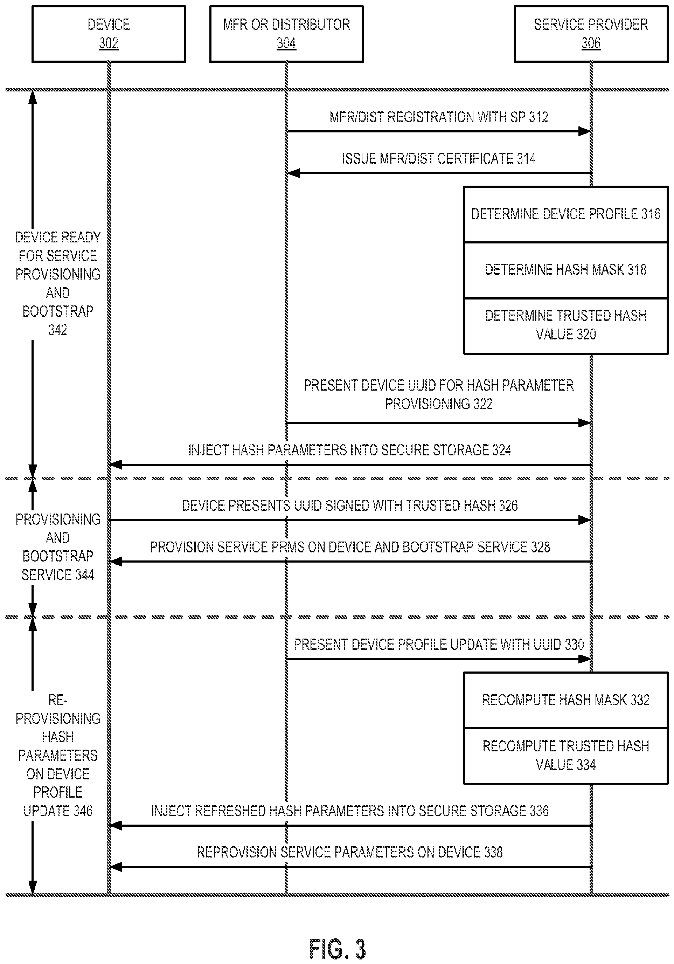

**Figure 3** is a flow diagram of an embodiment of a process for trust provisioning. Device 302 is a target device that is verified to have a secure environment for service provisioning and bootstrap. Device manufacturer or distributor 304 represents an entity that manufactures/assembles device 302. Device manufacturer/distributor 304 may or may not be the same entity as service provider 306. Service provider 306 hosts the service accessible via device 302.

There are three possible distinct phases to observe in Figure 3. The first phase is when device 302 is ready for service provisioning and bootstrap 342. In phase 342, according to the invention, service provider 306 determines device profile and expected values for hashes based on the profile. The service provider can also determine the hash mask of components in device 302 that should be monitored for integrity. The next phase is when the device is configured with its secure values, and is provisioning and bootstrap service 344. In phase 344, device 302 verifies its integrity with service provider 306, which then allows the device to provide the service. The next phase is re-provisioning, which will not be present in all embodiments. Phase 346 is re-provisioning hash parameters on device profile update. The device profile can be modified, and if it is, the secure environment can be recomputed.

In initial provisioning (342), the device manufacturer/distributor registers with the service provider, 312. The service provider issues a certificate to the manufacturer or distributor, 314, when registration is accepted/authorized. The registration includes identifying the device and its capabilities and configuration. The service provider determines a device profile, 316, for the device and computes hash mask, 318, and trusted hash value, 320, parameter values.

In one embodiment, the manufacturer/distributor presents UUIDs of specific devices for hash parameter provisioning, 322. Service provider 306 will typically perform the computation of the hash parameters, but could alternatively have a manufacturer or a third party perform the computations. The service provider returns the hash parameter values, which either the service provider or the manufacturer/distributor injects into the secure storage of the device, 324. This hash parameter can be provisioned into a UICC on the device, which is a connection root of trust under control of the service provider. These parameters provisioned into the UICC or connection secure storage can then be used by the HSTC to compute the Hash Mask (for example, HSTC 250 and hash mask 282 of Figure 2). In one embodiment, the service provider purchases the devices from the manufacturer/distributor, and will then perform all software and configuration work on the device.

The HSTC function provides a root of trust in that the hash parameter(s) indicates what components are included in the hash signatures. Such a root of trust enables an external entity to trust the device based on the correct signature indicating that the device has all components, and has not been modified (or the signature would not match). The TPM provides a root of trust in that it provides one or more values from a trusted secure storage. Thus, an SHIV function can verify the stored signature provided to verify that the device is correctly configured without modification. The hash parameters thus provide a span or scope of the signature, which can also be later verified for integrity.

In one embodiment, the device presents a UUID signed with the trusted hash, 326. It will be understood that both the service provider and the device itself will compute the trusted hash. The service provider provides the expected values that are stored in the device. The device computes the hash values on the active system configuration to compare against the expected values. When integrity is verified (i.e., by the SHIV) at the device, it can sign the UUID with the trusted hash and send it to the service provider or other external entity. In response to the signed UUID, the service provider can trust the device, and provisions service parameters on the device and bootstrap service, 328.

In one embodiment, the device presents the UUID signed with a trusted hash that has a scope identified in the request for verification. According to the invention, an external entity (e.g., a service provider) can request verification of the device platform, and specify in the request the scope of verification requested. The scope of the hash computation performed by the device in response to such a request can be different in scope from the hash computation performed in the initial provisioning. Thus, in one embodiment, the HSTC and the SHIV can both, independently, perform a computation based on a scope or hash mask provided.

According to the invention, a re-provisioning phase 346 occurs. It will be understood that re-provisioning could potentially occur multiple times, whereas an initial provisioning is expected to only occur once. In one embodiment, the manufacturer or distributor provides an updated device profile associated with a UUID, 330. The service provider recomputes the hash parameters of the hash mask, 332, and the trusted hash value, 334. The update to the device profile can be an additional component in an operating system or in an application layer that should then be included in the hash mask. Thus, the addition of a permitted change in the device can change the expected signature (hash value). The scope of the hash can be changed to span the updated component(s).

The service provider provides the recomputed hash parameters, which are then injected into the secure storage of the device, 336. Once the device includes new hash parameters, it will need to be reprovisioned for service. Thus, the service provider reprovisions the service parameters on the device after refreshing the hash parameters, 338.

Thus, as described herein, trusted hash provisioning is provided for first time provisioning and reprovisioning. A last known integral state can be presented by the device to the service provider, as a UUID signed with a hash. The hash is created with the HSTC function, which defines a scope of the hash, and verified with the SHIV function. It will be understood that there should be a mechanism for securely exchanging a known trusted value of the hash between manufacturer or distributor 304 and service provider 306. The known trusted value of the hash can then be coupled to a UUID and provisioned into a secure database securely shared by both manufacturer/distributor 304 and service provider 306. The known trusted value of the hash will need to be reprovisioned into the database in the event of an update to any of its constituting elements.

It will be understood that the original (first time) provisioning in phases 342 and 344 occur in response to a provisioning event or provisioning trigger. Similarly, a reprovisioning event or trigger can cause the reprovisioning. In one embodiment, secure storing to the secure storage of either one of the hash mask or the trusted hash value, or both, will trigger the HSTC and the SHIV functions.

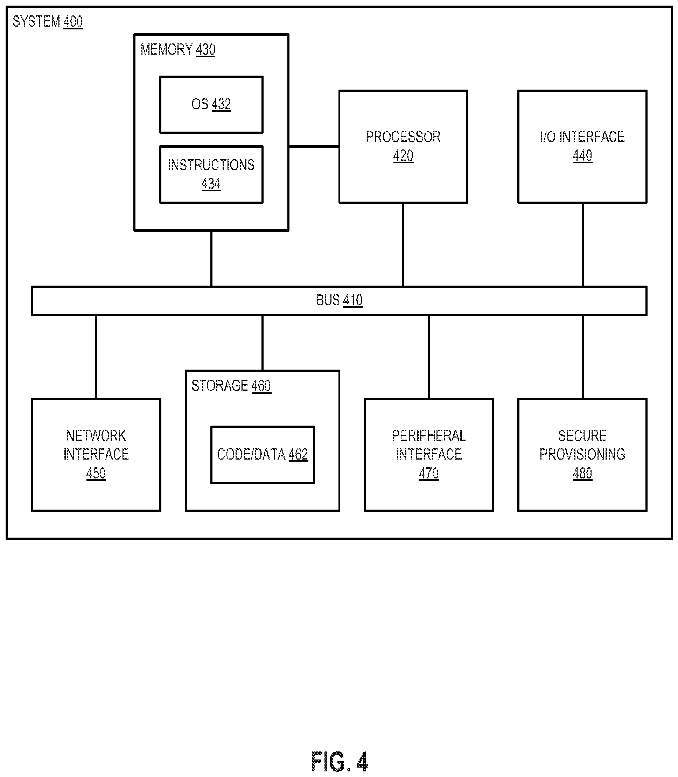

**Figure 4** is a block diagram of an embodiment of a computing system in which trust provisioning can be used. System 400 represents a computing device in accordance with any embodiment described herein, and can be computing device on a gaming or entertainment control system, a scanner, copier, printer, a set top box, a DVR (digital video recorder), a smart meter, a point of sale (PoS), a vending machine, an ATM, a factory machine, or other electronic device. System 400 includes processor 420, which provides processing, operation management, and execution of instructions for system 400. Processor 420 can include any type of microprocessor, central processing unit (CPU), processing core, or other processing hardware to provide processing for system 400. Processor 420 controls the overall operation of system 400, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

Memory 430 represents the main memory of system 400, and provides temporary storage for code to be executed by processor 420, or data values to be used in executing a routine. Memory 430 includes one or more memory devices that can include read-only memory (ROM), flash memory, one or more varieties of random access memory (RAM), or other memory devices, or a combination of such devices. Memory 430 stores and hosts, among other things, operating system (OS) 432 to provide a software platform for execution of instructions in system 400. Additionally, other instructions 434 are stored and executed from memory 430 to provide the logic and the processing of system 400. OS 432 and instructions 434 are executed by processor 420.

Processor 420 and memory 430 are coupled to bus/bus system 410. Bus 410 is an abstraction that represents any one or more separate physical buses, communication lines/interfaces, and/or point-to-point connections, connected by appropriate bridges, adapters, and/or controllers. Therefore, bus 410 can include, for example, one or more of a system bus, a Peripheral Component Interconnect (PCI) bus, a HyperTransport or industry standard architecture (ISA) bus, a small computer system interface (SCSI) bus, a universal serial bus (USB), or an Institute of Electrical and Electronics Engineers (IEEE) standard 1394 bus (commonly referred to as "Firewire"). The buses of bus 410 can also correspond to interfaces in network interface 450.

System 400 also includes one or more input/output (I/O) interface(s) 440, network interface 450, one or more internal mass storage device(s) 460, and peripheral interface 470 coupled to bus 410. I/O interface 440 can include one or more interface components through which a user interacts with system 400 (e.g., video, audio, and/or alphanumeric interfacing). Network interface 450 provides system 400 the ability to communicate with remote devices (e.g., servers, other computing devices) over one or more networks. Network interface 450 can include an Ethernet adapter, wireless interconnection components, USB (universal serial bus), or other wired or wireless standards-based or proprietary interfaces.

Storage 460 can be or include any conventional medium for storing large amounts of data in a nonvolatile manner, such as one or more magnetic, solid state, or optical based disks, or a combination. Storage 460 holds code or instructions and data 462 in a persistent state (i.e., the value is retained despite interruption of power to system 400). Storage 460 can be generically considered to be a "memory," although memory 430 is the executing or operating memory to provide instructions to processor 420. Whereas storage 460 is nonvolatile, memory 432 can include volatile memory (i.e., the value or state of the data is indeterminate if power is interrupted to system 400).

Peripheral interface 470 can include any hardware interface not specifically mentioned above. Peripherals refer generally to devices that connect dependently to system 400. A dependent connection is one where system 400 provides the software and/or hardware platform on which operation executes, and with which a user interacts.

In one embodiment, system 400 includes secure provisioning 480. Secure provisioning 480 includes a secure environment in which a hash scale can be determined and a secure hash integrity can be verified. Secure provisioning 480 includes a TPM or other trusted secure memory, and trusted hash parameters that are stored in the TPM. In one embodiment, secure provisioning 480 includes a UUID that is signed by verified trusted hash parameters to provision system 400 for service with a service provider.

Flow diagrams as illustrated herein provide examples of sequences of various process actions. Although shown in a particular sequence or order, unless otherwise specified, the order of the actions can be modified. Thus, the illustrated embodiments should be understood only as an example, and the process can be performed in a different order, and some actions can be performed in parallel. Additionally, one or more actions can be omitted in various embodiments; thus, not all actions are required in every embodiment. Other process flows are possible.

To the extent various operations or functions are described herein, they can be described or defined as software code, instructions, configuration, and/or data. The content can be directly executable ("object" or "executable" form), source code, or difference code ("delta" or "patch" code). The software content of the embodiments described herein can be provided via an article of manufacture with the content stored thereon, or via a method of operating a communication interface to send data via the communication interface. A machine readable storage medium can cause a machine to perform the functions or operations described, and includes any mechanism that stores information in a form accessible by a machine (e.g., computing device, electronic system, etc.), such as recordable/non-recordable media (e.g., read only memory (ROM), random access memory (RAM), magnetic disk storage media, optical storage media, flash memory devices, etc.). A communication interface includes any mechanism that interfaces to any of a hardwired, wireless, optical, etc., medium to communicate to another device, such as a memory bus interface, a processor bus interface, an Internet connection, a disk controller, etc. The communication interface can be configured by providing configuration parameters and/or sending signals to prepare the communication interface to provide a data signal describing the software content. The communication interface can be accessed via one or more commands or signals sent to the communication interface.

Various components described herein can be a means for performing the operations or functions described. Each component described herein includes software, hardware, or a combination of these. The components can be implemented as software modules, hardware modules, special-purpose hardware (e.g., application specific hardware, application specific integrated circuits (ASICs), digital signal processors (DSPs), etc.), embedded controllers, hardwired circuitry, etc.

Besides what is described herein, various modifications can be made to the disclosed embodiments and implementations of the invention without departing from their scope. Therefore, the illustrations and examples herein should be construed in an illustrative, and not a restrictive sense. The scope of the protection is defined by the claims.

## Claims

1. A method for securing a device environment comprising:
determining (316), at a computing device (100), a device profile that identifies a single-purpose or a multi-purpose target device (302), as well as components of the target device (302);
determining (318), at the computing device (100), a hash mask that defines a first scope of hash computation, including identifying all components of the target device whose signatures are to be included in a trusted hash computation; and
computing (320), at the computing device (100), the trusted hash computation based on the signatures of the identified components to create a first signature having the first defined scope; **characterised by**:
receiving (330), at the computing device (100), an updated device profile of the target device (302), including an update to one or more of the identified components;
re-computing (332, 334), at the computing device (100), the trusted hash computation based on the signatures of the updated identified components to create a second signature having the first defined scope;
receiving a request at the computing device (100) requesting a third signature, the request identifying a second scope of hash computation to be performed to generate the third signature to verify integrity;
computing the third signature by computing a trusted hash computation based on the second scope of hash computation requested; and
transmitting the third signature for verification in response to the request.

2. The method of claim 1, wherein the computing device (100) comprises the target device (302).

3. The method of claim 1, wherein the computing device (100) comprises a service provider (306) server device.

4. The method of claim 1, wherein the target device (302) comprises a standalone computing device that does not have a user interface to interact with the device configuration.

5. The method of claim 1, wherein the components include one or more of BIOS (basic input/output system), operating system modules, kernel image, firmware elements, driver packages, filesystems, application modules, or communication drivers.

6. The method of claim 1, further comprising:
storing the computed trusted hash computation in a trusted memory device of the target device (302).

7. The method of claim 6, further comprising:
storing the computed trusted hash computation with a universal unique identifier (330) associated with the target device (302).

8. The method of claim 1, further comprising:
using the computed trusted hash computation to determine integrity of the target device (302) over a machine-to-machine connection.

9. An apparatus comprising means for performing operations to execute a method in accordance with any of claims 1 to 8.

10. An article of manufacture comprising a computer readable storage medium having content stored thereon, which when executed causes a machine to perform operations to execute a method in accordance with any of claims 1 to 8.

## Patentansprüche

1. Verfahren zur Sicherung einer Vorrichtungsumgebung, umfassend:
Bestimmen (316) an einer Computervorrichtung (100) eines Vorrichtungsprofils, das eine Einzweck- oder eine Mehrzweck-Zielvorrichtung (302) sowie Komponenten der Zielvorrichtung (302) definiert;
Bestimmen (318) an der Computervorrichtung (100) einer Hash-Maske, die einen ersten Umfang von Hash-Berechnung definiert, umfassend ein Identifizieren aller Komponenten der Zielvorrichtung, deren Signaturen in eine gesicherte Hash-Berechnung einbezogen werden sollen;
Berechnen (320) an der Computervorrichtung (100) der gesicherten Hash-Berechnung basierend auf den Signaturen der identifizierten Komponenten, um eine erste Signatur mit dem ersten definierten Umfang zu erzeugen;
**gekennzeichnet durch**:
Empfangen (330) an der Computervorrichtung (100) eines aktualisierten Vorrichtungsprofils der Zielvorrichtung (302), das eine Aktualisierung einer oder mehrerer der identifizierten Komponenten umfasst;
Neuberechnen (332, 334) an der Computervorrichtung (100) der gesicherten Hash-Berechnung basierend auf den aktualisierten identifizierten Komponenten, um eine zweite Signatur mit dem ersten definierten Umfang zu erzeugen;
Empfangen einer Anforderung an der Computervorrichtung (100), die eine dritte Signatur anfordert, wobei die Anforderung einen zweiten Umfang von Hash-Berechnung identifiziert, die durchgeführt werden soll, um die dritte Signatur zum Verifizieren von Integrität zu generieren;
Berechnen der dritten Signatur durch Berechnen einer gesicherten Hash-Berechnung basierend auf dem zweiten Umfang von Hash-Berechnung, die angefordert wird; und
Senden der dritten Signatur zur Verifizierung in Reaktion auf die Anforderung.

2. Verfahren nach Anspruch 1, wobei die Computervorrichtung (100) die Zielvorrichtung (302) umfasst.

3. Verfahren nach Anspruch 1, wobei die Computervorrichtung (100) eine Servervorrichtung eines Dienstanbieters (306) umfasst.

4. Verfahren nach Anspruch 1, wobei die Zielvorrichtung (302) eine eigenständige Computervorrichtung umfasst, die keine Benutzerschnittstelle zum Interagieren mit der Vorrichtungskonfiguration aufweist.

5. Verfahren nach Anspruch 1, wobei die Komponenten eines oder mehrere von einem BIOS (Basis-Eingabe-/Ausgabe-System), Betriebssystemmodulen, einem Kern-Image, Firmware-Elementen, Treiberpaketen, Dateisystemen, Anwendungsmodulen oder Kommunikationstreibern umfassen.

6. Verfahren nach Anspruch 1, ferner umfassend:
Speichern der berechneten gesicherten Hash-Berechnung in einer gesicherten Speichervorrichtung der Zielvorrichtung (302).

7. Verfahren nach Anspruch 6, ferner umfassend:
Speichern der berechneten gesicherten Hash-Berechnung mit einer universellen eindeutigen Kennung (330), die mit der Zielvorrichtung (302) assoziiert ist.

8. Verfahren nach Anspruch 1, ferner umfassend:
Verwenden der berechneten gesicherten Hash-Berechnung zum Bestimmen einer Integrität der Zielvorrichtung (302) über eine Maschine-zu-Maschine-Verbindung.

9. Gerät, umfassend Mittel zum Durchführen von Operationen zum Ausführen eines Verfahrens in nach wobei der Ansprüche 1 bis 8.

10. Herstellungsgegenstand, umfassend ein computerlesbares Speichermedium, das Inhalt darauf gespeichert aufweist, der bei Ausführung eine Maschine zum Durchführen von Operationen zum Ausführen eines Verfahrens nach einem der Ansprüche 1 bis 8 veranlasst.

## Revendications

1. Procédé de sécurisation d'un environnement de dispositif, comportant les étapes consistant à :
déterminer (316), au niveau d'un dispositif informatique (100), un profil de dispositif qui identifie un dispositif cible (302) spécialisé ou polyvalent, ainsi que des composants du dispositif cible (302) ;
déterminer (318), au niveau du dispositif informatique (100), un masque de hachage qui définit une première portée de calcul de hachage, ce qui inclut l'identification de tous les composants du dispositif cible dont les signatures sont à inclure dans un calcul de hachage de confiance ; et
effectuer (320), au niveau du dispositif informatique (100), le calcul de hachage de confiance d'après les signatures des composants identifiés pour créer une première signature présentant la première portée définie ;
**caractérisé par** les étapes consistant à :
recevoir (330), au niveau du dispositif informatique (100), un profil de dispositif mis à jour du dispositif cible (302), comprenant une mise à jour d'un ou plusieurs des composants identifiés ;
renouveler (332, 334), au niveau du dispositif informatique (100), le calcul de hachage de confiance d'après les signatures des composants identifiés mis à jour pour créer une deuxième signature présentant la première portée définie ;
recevoir une demande au niveau du dispositif informatique (100) demandant une troisième signature, la demande identifiant une deuxième portée de calcul de hachage à effectuer pour générer la troisième signature afin de vérifier l'intégrité ;
calculer la troisième signature en effectuant un calcul de hachage de confiance d'après la deuxième portée de calcul de hachage demandée ; et
émettre la troisième signature en vue d'une vérification en réponse à la demande.

2. Procédé selon la revendication 1, le dispositif informatique (100) comportant le dispositif cible (302) .

3. Procédé selon la revendication 1, le dispositif informatique (100) comportant un dispositif serveur de fournisseur (306) de services.

4. Procédé selon la revendication 1, le dispositif cible (302) comportant un dispositif informatique autonome qui ne possède pas d'interface d'utilisateur pour interagir avec la configuration du dispositif.

5. Procédé selon la revendication 1, les composants incluant un ou plusieurs composants parmi un BIOS (système d'entrée/sortie de base), des modules de système d'exploitation, une image de noyau, des éléments de microprogramme, des paquetages de pilotes, des systèmes de fichiers, des modules d'application ou des pilotes de communication.

6. Procédé selon la revendication 1, comportant en outre l'étape consistant à :
stocker le calcul de hachage de confiance effectué dans un dispositif de mémoire de confiance du dispositif cible (302).

7. Procédé selon la revendication 6, comportant en outre l'étape consistant à :
stocker le calcul de hachage de confiance effectué avec un identifiant unique universel (330) associé au dispositif cible (302).

8. Procédé selon la revendication 1, comportant en outre l'étape consistant à :
utiliser le calcul de hachage de confiance effectué pour déterminer l'intégrité du dispositif cible (302) via une connexion de machine à machine.

9. Appareil comportant des moyens destinés à effectuer des opérations pour exécuter un procédé selon l'une quelconque des revendications 1 à 8.

10. Article manufacturé comportant un support de stockage lisible par ordinateur sur lequel est stocké un contenu qui, lorsqu'il est exécuté, amène une machine à effectuer des opérations pour exécuter un procédé selon l'une quelconque des revendications 1 à 8 .
